# FASCICULE DE BREVET EUROPEEN

(11) **EP 0 509 918 B1**
(45) Date de publication et mention de la délivrance du brevet: **15.02.1995**
(21) Numéro de dépôt: 92401057.2
(22) Date de dépôt: 15.04.1992
(51) Int. Cl.: F16F 1/42, F01N 7/18

(54) **Dispositif élastique de suspension d'une structure vibrante à une structure rigide**
Elastische Vorrichtung zur Aufhängung einer schwingenden Struktur gegenüber einer steifen Struktur
Elastic device for the suspension of a vibrating structure from a rigid structure

(30) Priorité: 18.04.1991 FR 9104798
(43) Date de publication de la demande: 21.10.1992
(73) Titulaire: HUTCHINSON, F-75384 Paris Cédex 08 (FR)
(72) Inventeur: Sauvat, Gilles, F-28200 Chateaudun (FR)
(74) Mandataire: Picard, Jean-Claude Georges

(56) Documents cités:
- EP-A- 0 184 661
- EP-A- 0 315 805
- EP-A- 0 320 088
- DE-A- 2 658 358
- DE-A- 3 923 149
- DE-C- 688 758
- GB-A- 2 032 054
- US-A- 2 154 586
- US-A- 2 948 502

## Description

La présente invention concerne un dispositif pour la suspension d'une structure vibrante sur une structure de support rigide, notamment pour la suspension d'une tubulure d'échappement d'un moteur de véhicule sur la caisse de ce dernier, du type comportant un élément élastique propre à travailler en traction et pourvu d'au moins un premier organe d'accrochage à l'une desdites structures et d'au moins un second organe d'accrochage à l'autre structure comme décrit par le document DE-A-688758.

Le but général d'un tel dispositif est, comme connu, de supporter toute la ligne d'échappement sans que les vibrations auxquelles elle est soumise lors de la marche du moteur soient transmises de façon trop sensible à la caisse du véhicule.

Actuellement, ces dispositifs comprennent essentiellement un collier de caoutchouc éventuellement renforcé, accroché en partie haute à la caisse du véhicule et à la partie basse duquel est suspendue la tubulure d'échappement, laquelle peut comporter la tubulure proprement dite, un pot amortisseur de bruits classique, un pot catalytique, etc. Ces colliers ont une trop grande raideur statique en traction, une faible raideur en compression (vis-à-vis des efforts tendant à faire remonter la tubulure vers la caisse), et encore une faible raideur vis-à-vis des efforts s'exerçant latéralement sur cette tubulure. De ce fait : leur grande raideur en traction leur fait transmettre une grande partie des vibrations à la caisse du véhicule ; leurs faibles raideurs à la compression et vis-à-vis des efforts latéraux autorisent de trop grands débattements verticaux d'une part, latéraux d'autre part.

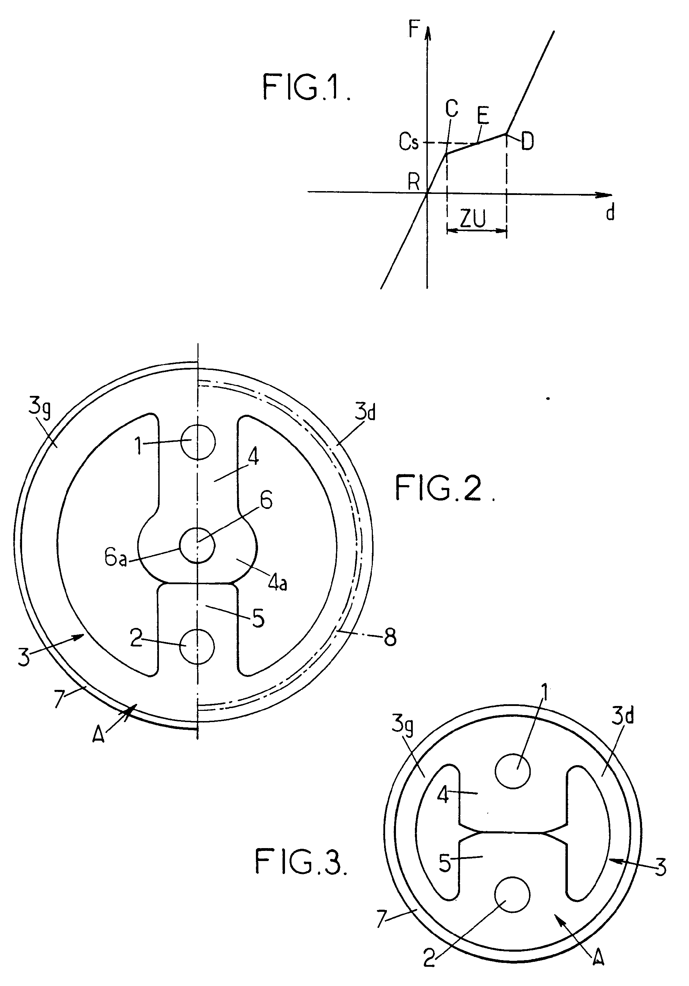

Le but de la présente invention est de remédier à ces inconvénients de la technique antérieure, et d'obtenir une forte raideur statique du dispositif vis-à-vis des efforts F en traction et en compression, de part et d'autre d'une zone utile ZU à très faible raideur statique, cette zone utile étant celle qui avoisine de côté et d'autre le point d'équilibre E de la tubulure d'échappement, dont le poids soumet le dispositif de suspension à une charge d'équilibre statique Cs (voir figure 1, dans laquelle d désigne les déformations en vertical du dispositif).

Pour fixer les idées, la raideur statique du dispositif dans la zone utile ZU doit être de l'ordre de 7 à 28 N/mm, et de 40 à 70 N/mm dans les deux zones à forte pente qui l'encadrent, ceci pour un poids de tubulure de l'ordre de 70 à 130 N.

Il est aussi souhaitable d'obtenir un très bon comportement du dispositif au fluage et en fatigue, une bonne tenue en température et une faible rigidification dynamique.

Le dispositif de suspension devra assurer en outre une excellente tenue latérale de la tubulure d'échappement.

Ces buts sont atteints, conformément à la présente invention, par un dispositif de suspension du type général défini au début, caractérisé en ce que lesdits organes d'accrochage sont constitués par des axes traversant ledit élément élastique et espacés l'un de l'autre dans la direction des efforts statiques, ce dispositif comportant une zone présentant une plage de fonctionnement à faible raideur en traction ou compression, vis-à-vis des efforts de traction ou compression s'exerçant entre les organes d'accrochage précités ; au moins deux zones rigides de butée coopérantes propres à conférer à l'élément au repos, par une mise en appui mutuel, et sous l'action de premiers moyens appropriés, une forte raideur vis-à-vis des efforts de compression agissant entre lesdits organes d'accrochage, dans une plage de fonctionnement à forte raideur en compression située à la jonction, du côté compression, avec ladite plage de fonctionnement à faible raideur ; et des seconds moyens propres à conférer audit élément une forte raideur vis-à-vis des efforts de traction agissant entre lesdits organes d'accrochage, dans une plage de fonctionnement à forte raideur en traction située à la jonction, du côté traction, avec ladite plage de fonctionnement à faible raideur.

On comprend que ladite zone à faible raideur est agencée pour intervenir dès que les deux dites zones de butée ne sont plus en appui mutuel.

Avantageusement, ladite plage de fonctionnement à faible raideur est fournie par deux branches souples dudit élément, lesquelles s'étendent globalement entre lesdits premier et second organes d'accrochage, de part et d'autre d'un corps central à plus forte raideur, comportant lesdites zones rigides de butée, également reliées, respectivement, auxdits organes d'accrochage.

Lesdits premiers moyens peuvent être agencés pour dilater au moins l'une des zones de butée à grande raideur afin de réaliser une mise en appui mutuel de compression de ces deux zones de butée.

On peut également prévoir un dispositif caractérisé en ce que ledit élément élastique est comprimé par une armature extérieure amenant les deux dites zones de butée en appui de compression l'une sur l'autre lorsque ledit élément est au repos, en ce que ladite zone de fonctionnement à faible raideur est constituée par deux branches relativement souples reliant l'une desdites zones rigides de butée à cette armature, et en ce que lesdits seconds moyens comprennent une troisième zone rigide de butée propre à venir en appui de compression sur la zone de butée précitée, à laquelle sont raccordées lesdites branches, lors du fonctionnement dudit élément dans ladite plage de fonctionnement à forte raideur en traction.

Différents modes d'exécution de l'invention vont maintenant être décrits à titre d'exemples nullement limitatifs, avec référence aux figures 2 à 8 du dessin ci-annexé, qui sont des vues en élévation de face du dispositif, ainsi qu'avec référence aux figures 9 à 14c dans lesquelles :
- la figure 9a est une vue en élévation de face d'un autre mode de réalisation du dispositif élastique, représenté sans insert ;
- la figure 9b est une vue analogue avec insert ;
- la figure 10a est une vue en élévation de face d'encore un autre mode de réalisation du dispositif élastique ;
- la figure 10b est une vue du même dispositif en coupe selon la ligne X-X de la figure 10a ;
- les figures 11a et 11b sont des vues respectivement analogues à celles des figures 10a et 10b, montrant encore un autre mode de réalisation du dispositif, la figure 11b étant une vue en coupe selon la ligne XI-XI de la figure 11a ;
- la figure 12a est une vue en élévation de face d'encore un autre mode de réalisation de l'invention ;
- la figure 12b est une vue en coupe selon la ligne XII-XII de la figure 12a ;
- la figure 13a est une vue de profil, avant déformation, d'encore un autre mode de réalisation d'un dispositif conforme à l'invention ;
- la figure 13b est une vue de profil du même dispositif après mise sous précontrainte de compression par déformation ;
- la figure 13c montre de face le dispositif de la figure 13b ;
- la figure 14a est une vue en coupe verticale d'encore un autre dispositif conforme à l'invention, tel que sorti de moulage ;
- la figure 14b est une vue en coupe selon la ligne XIV-XIV de la figure 14c après rentrée des parties extrêmes de la pièce dans l'ouverture de la partie centrale et mise sous précontrainte ; et
- la figure 14c est une vue de face du dispositif de la figure 14b.

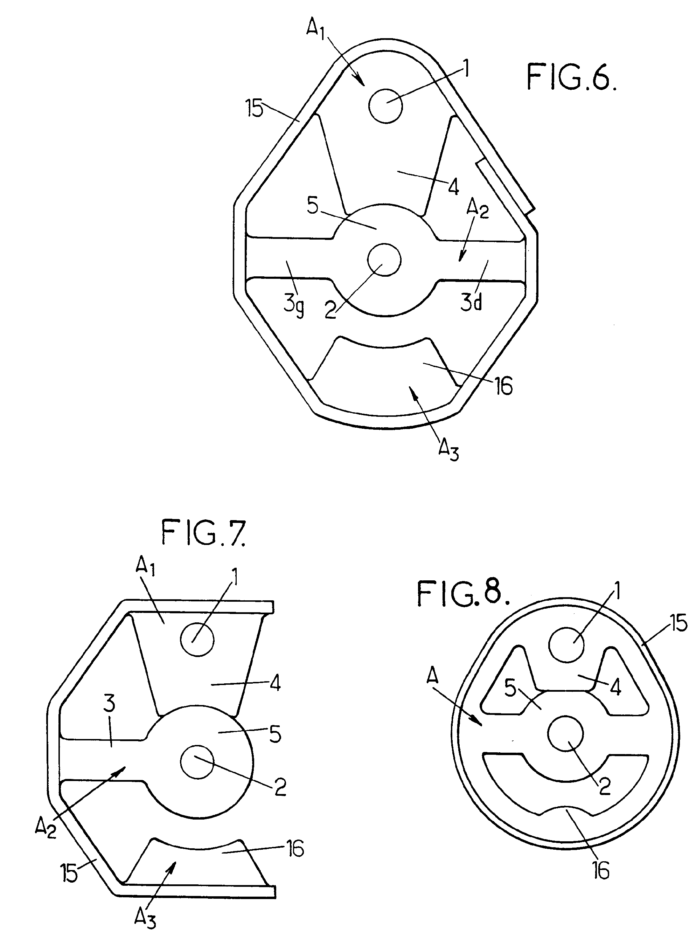

Sur toutes ces figures on a référencé l'élément élastique en A et en 1 et 2, respectivement, des organes d'accrochage - constitués d'axes traversants - de cet élément A d'une part à la caisse d'un véhicule (non représentée), d'autre part à la tubulure d'échappement de ce dernier (également non représentée) qu'il s'agit d'isoler de la caisse au point de vue vibratoire. Il est à noter que dans les modes de réalisation des figures 6 et 7 l'élément élastique est constitué de trois blocs A1, A2, A3, alors qu'il est d'un seul tenant dans les autres modes de réalisation.

Le dispositif des figures 2 à 4 se présente sous la forme générale d'un anneau 3 en caoutchouc synthétique dont les branches droite et gauche 3d, 3g assurent la plage de fonctionnement à faible raideur du dispositif et qui est pourvu intérieurement de deux zones de butée diamétralement opposées 4 et 5, zones qui sont traversées chacune d'au moins un passage pour la réception de l'axe constituant l'organe d'accrochage correspondant, respectivement 1 ou 2. Pour qu'au repos (c'est-à-dire à l'état non chargé par la tubulure d'échappement) l'élément A soit précontraint et amené au point de fonctionnement R du graphique de la figure 1, il convient de mettre en appui de compression l'une sur l'autre les zones de butée 4 et 5, ce qui peut être réalisé de différentes façons.

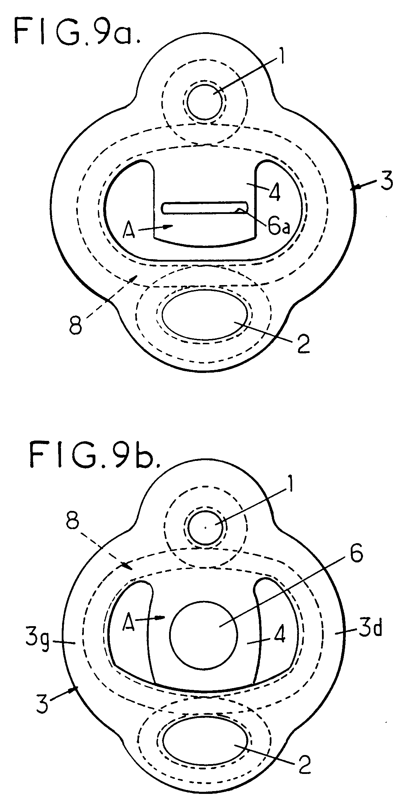

Dans le mode de réalisation de la figure 2, comme dans celui des figures 9a et 9b, on utilise un insert rigide 6 (en matière plastique ou acier) engagé dans un passage de section plus faible 6a prévu à l'extrémité de la zone de butée 4. L'introduction de cet insert dilate, en 4a, l'extrémité de la zone 4 et la met en appui de compression sur l'extrémité de l'autre zone de butée 5 qui lui fait face, ceci en mettant légèrement sous tension l'anneau 3.

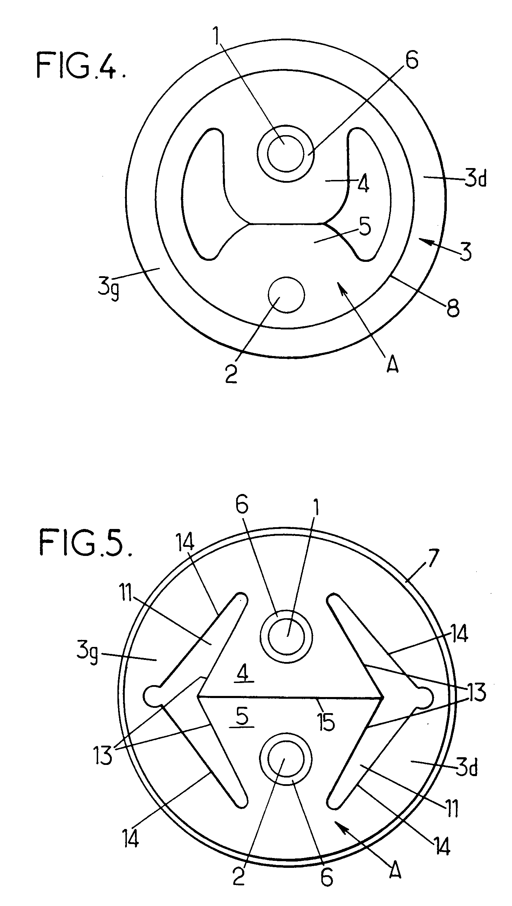

Dans le mode de réalisation de la figure 3, ce sont les organes d'accrochage 1 et 2 eux-mêmes, dont la section est plus forte que celle des passages des zones de butée 4 et 5 dans lesquels ils sont engagés, avec pour résultat la mise en butée de compression mutuelle des extrémités en regard de ces deux zones de butée.

Dans le mode de réalisation de la figure 4, on utilise un insert 6 analogue à celui de la figure 2, mais creux, ce qui lui permet de recevoir l'organe d'accrochage correspondant 1. Dans le cas où l'insert creux 6 est utilisé - comme cela est bien entendu envisageable - pour le montage de l'organe d'accrochage 2 relié à la tubulure d'échappement, il peut avantageusement être réalisé en une matière thermiquement isolante afin de protéger le caoutchouc de l'élément A lors des élévations de température de l'organe d'accrochage 2. Cette disposition est évidemment envisageable dans tous les autres modes de réalisation.

Enfin on prévoit, dans le mode de réalisation des figures 2 à 4, que la plage de fonctionnement en forte traction est obtenue par une frette extérieure ou cerclage 7 (partie gauche de la figure 2 et figure 3) métallique, plastique ou en matériau composite, se présentant sous la forme d'un câble, d'un feuillard ou encore d'une tresse, avec éventuellement un enrobage de caoutchouc. Comme montré à droite sur la figure 2 et sur la figure 4, ce cerclage, référencé en 8, peut aussi être incorporé à l'élément A.

Il est à noter aussi, notamment lorsque l'on utilise un cerclage extérieur 7, que l'on peut l'utiliser pour mettre en compression l'une sur l'autre les deux zones de butée 4 et 5. Il suffit pour ce faire de prévoir un cerclage 7 dont la circonférence est inférieure à celle de l'élément A, ce qui le soumet, au repos, à la précontrainte souhaitée pour se trouver au point de fonctionnement R du graphique de la figure 1. Dans ce cas, le diamètre des passages des organes d'accrochage 1 et 2 peut être le même que celui de ces organes.

Ceci étant, le fonctionnement du dispositif des modes de réalisation des figures 2 à 4 est le suivant.

Au repos (dispositif non chargé par la tubulure d'échappement), l'élément A est précontraint, et le point de fonctionnement est en R, dans une zone à forte raideur en compression.

En charge, la charge Cs due au poids de cette tubulure ramène le point de fonctionnement en E, au milieu de la zone CD à faible raideur du graphique de la figure 1, ce qui permet au dispositif de filtrer très efficacement les vibrations de faible amplitude qui sont transmises à l'organe d'accrochage 2 pour la tubulure d'échappement. Cela signifie qu'au coude C les zones de butée 4 et 5 ont cessé de se comprimer mutuellement, et que le dispositif, tendu entre les organes d'accrochage 1 et 2, travaille essentiellement par les branches à faible raideur 3d et 3g. Lorsque l'effort de traction atteint la valeur correspondant au point D du graphique, le cerclage 7 ou 8 intervient et donne au dispositif la grande rigidité en traction souhaitée (partie montante à forte pente au-delà du coude D), avec un effet de butée vis-à-vis des très fortes accélérations verticales descendantes agissant sur la tubulure. Bien entendu, si ces accélérations sont ascendantes, la butée est fournie par la remise en appui mutuel des zones de butée 4 et 5.

Les dispositifs des autres modes de réalisation ont le même mode de fonctionnement, nonobstant les quelques différences structurelles suivantes.

Dans le mode de réalisation de la figure 5, l'élément A se présente sous la forme d'un disque de matériau élastique entouré par un cerclage 7 et comportant deux alvéoles en chevrons symétriques 11, dont les parois opposées respectives ont été référencées 13 et 14. Les zones de butée à forte raideur 4, 5 sont constituées dans le corps central de l'élément, de part et d'autre d'une fente diamétrale 15. Ces deux butées peuvent être comprimées l'une sur l'autre au repos, grâce à des inserts 6 de réception des organes d'accrochage 1 et 2, lesquels inserts sont d'un diamètre plus fort que celui de leurs passages de réception respectifs prévus dans le corps central de l'élément.

Ceci étant, on voit que la plage de fonctionnement à faible raideur est obtenue dès décollement mutuel des butées 4 et 5, par le travail en flexion des branches à faible raideur 3d et 3g qui limitent les alvéoles 11 vers l'extérieur. La plage de fonctionnement à forte raideur en traction est obtenue quant à elle lorsque la traction entre les organes 1 et 2 est suffisante pour que les alvéoles 11 se referment complètement, avec mise en appui mutuel de leurs parois opposées respectives 13 et 14. La résistance à la traction est ensuite assurée par les branches 3d et 3 g, rigidifiées en traction par le cerclage 7 ; on obtient ainsi, là encore, un changement brusque de pente (coude D du graphique).

Dans le mode de réalisation des figures 6 et 7, l'élément A en matériau élastique est constitué de trois blocs séparés A1, A2 et A3 (ce dernier constituant une butée à forte raideur 16) adhérisés à l'intérieur d'une armature métallique soudée 15 fermée (figure 6) ou ouverte (figure 7). Les blocs A1 et A3 sont diamétralement opposés, l'élément A1, dont l'extrémité 4 constitue une zone de butée à forte raideur en compression, recevant l'organe 1 d'accrochage du dispositif à la caisse du véhicule. Le bloc A2 est constitué de deux branches relativement souples 3d et 3g reliées à un moyeu central formant l'autre zone de butée à forte raideur en compression 5, et recevant en son centre l'organe d'accrochage 2 du dispositif à la tubulure d'échappement du véhicule.

Dans ces deux cas de figure, l'armature 15 est déformée après moulage de l'élément élastique pour qu'au repos les butées 4 et 5 soient encore en appui mutuel de compression, comme visible sur le dessin, et ceci pour les mêmes raisons que celles qui ont été amplement évoquées plus haut (fonctionnement au point R du graphique). Lorsque l'effort de traction entre les organes 1 et 2 est suffisant, cet appui disparaît et l'on se trouve dans la zone de fonctionnement à faible raideur CD du graphique, les efforts étant alors essentiellement encaissés par les branches 3d et 3g du bloc central A2. En D, il y a mise en appui mutuel des butées 5 et 16, et l'on entre dans la zone à forte raideur en traction.

Le dispositif du mode de réalisation de la figure 8 fonctionne de la même façon, mais avec un élément élastique A d'un seul tenant. Bien entendu, dans ce cas également le cerclage 15 a une circonférence légèrement inférieure à celle de l'élément A, pour le précomprimer au repos.

Le mode de réalisation des figures 9a et 9b, analogue à celui de la figure 2, a déjà été partiellement décrit plus haut. On voit en outre que le cerclage incorporé 8 en nylon ou acier, noyé dans le caoutchouc, présente en haut et en bas une boucle entourant les organes d'accrochage 1 et 2 pour reprendre les efforts en traction, avec une forte raideur.

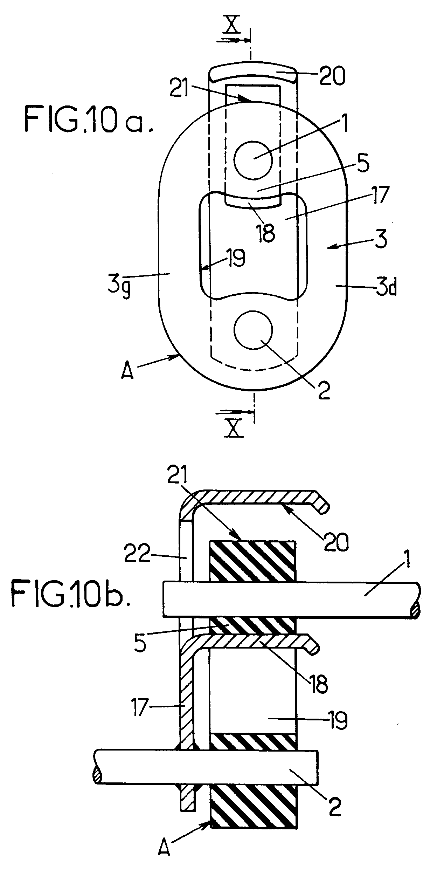

Dans le mode de réalisation des figures 10a et 10b, la plage de fonctionnement à faible raideur est encore obtenue par un anneau 3 dont les branches 3g et 3d relient l'un à l'autre les organes d'accrochage 1 et 2. L'organe d'accrochage 2 est solidarisé d'une pièce métallique rigide 17 dont un crochet 18 est, avant montage de la tubulure d'échappement, en appui de compression sur la partie 5 de l'élément A qui délimite vers le haut une ouverture 19 de cet élément. Ceci amène ici encore l'élément élastique A au point de fonctionnement R du graphique de la figure 1. La plage de fonctionnement à forte raideur en traction est alors obtenue lorsqu'un autre crochet 20 de la pièce 17 vient buter sur le sommet 21 de l'élément élastique à forte raideur A. On comprend que pendant le fonctionnement à faible raideur en traction le crochet 18 se déplace dans l'ouverture 19, et l'extrémité dépassante de l'organe 1 dans une autre ouverture 22 de la pièce 17.

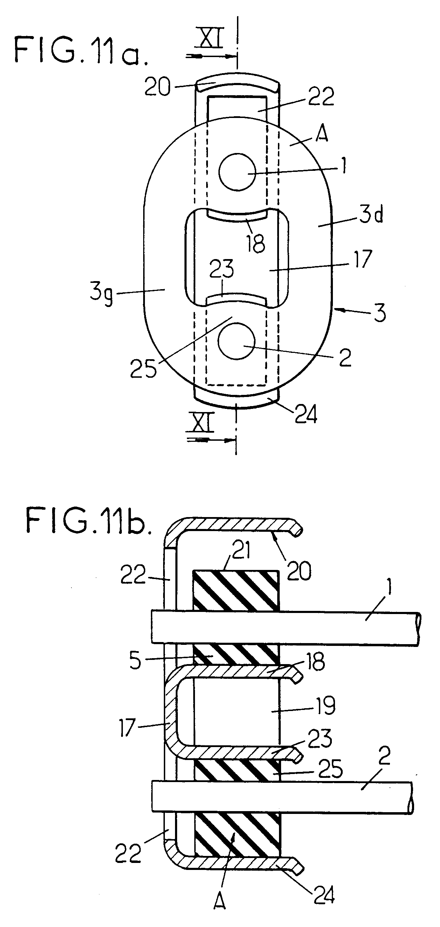

Dans la représentation du mode de réalisation des figures 11a et 11b, qui est voisin de celui des figures 10a et 10b, on a repris les mêmes références pour désigner les mêmes parties ou éléments du dispositif, ou ceux qui jouent le même rôle, ce qui dispense d'une description complète de la structure du dispositif, et de son fonctionnement.

La pièce 17 comporte ici deux crochets supplémentaires 23 et 24, enserrant entre eux une partie 25 de l'élément A transmettant les efforts de traction de l'organe d'accrochage 2 à la pièce 17 alors que cette transmision se fait sans intermédiaire de caoutchouc dans le mode de réalisation précédent. Les crochets 18 et 23 sont obtenus par découpe dans la pièce 17 et pliage, ce qui produit en même temps les ouvertures 22. La pièce 17 est donc une pièce d'un seul tenant, découpée et pliée.

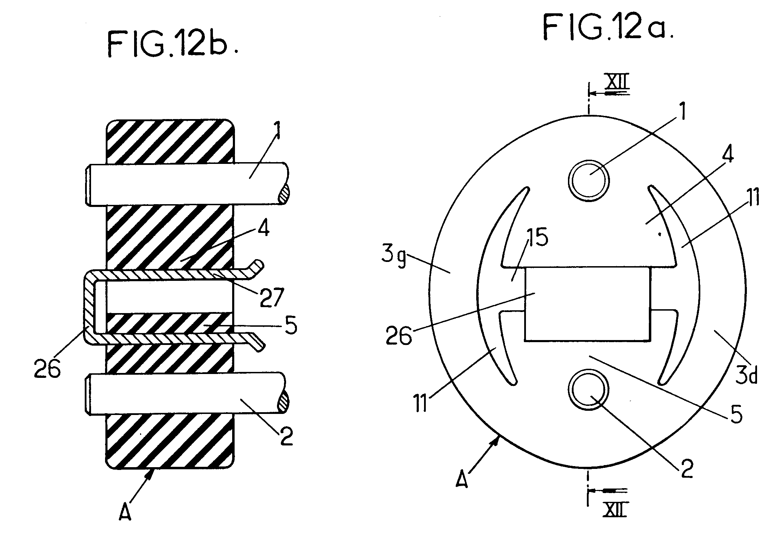

Le mode de réalisation des figures 12a et 12b peut être rapproché quant à lui de celui de la figure 5. Dans ce cas, un cavalier métallique rigide 26 assure la précontrainte en compression avant montage, la branche supérieure 27 de l'étrier pressant la zone de butée supérieure 4 de l'élément élastique A. La plage de fonctionnement à faible détente est assurée là encore par le travail en traction des branches à faible rigidité 3g et 3d.

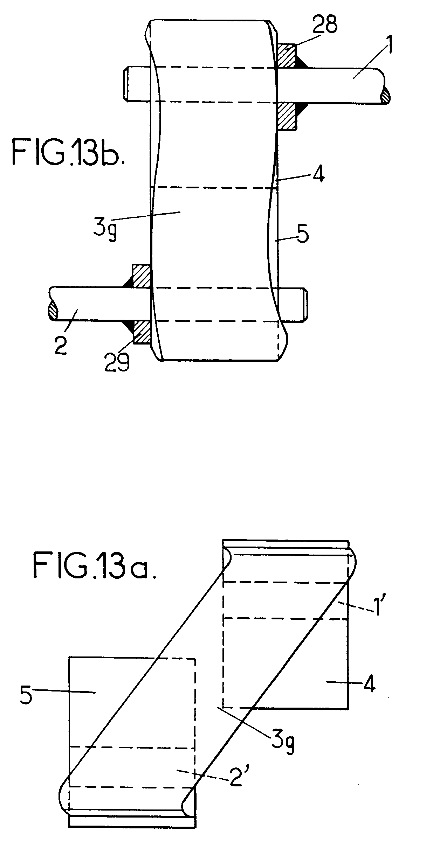

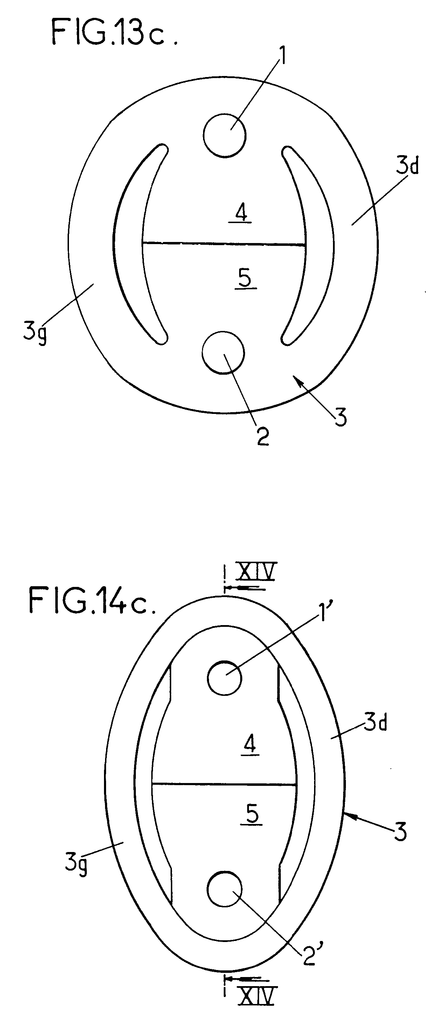

Le fonctionnement du mode de réalisation du dispositif élastique de la figure 13c est le même que celui du mode de réalisation illustré par la figure 3 et n'a donc pas besoin d'être à nouveau décrit. L'originalité réside ici dans le mode d'obtention de ce dispositif. On le moule comme indiqué à la figure 13a, en décalant les zones de butée 4 et 5, avec les trous de passage 1′ et 2′ pour les organes d'accrochage 1 et 2. La hauteur des zones 4 et 5 est telle qu'après réalignement (figure 13b) elles sont en butée de compression l'une contre l'autre. Pour maintenir l'alignement, des épaulements 28 et 29 sont prévus sur les organes d'accrochage 1 et 2. La zone à forte raideur en traction peut être obtenue là encore par un cerclage extérieur ou incorporé aux bras 3g et 3d (non représenté sur ces figures).

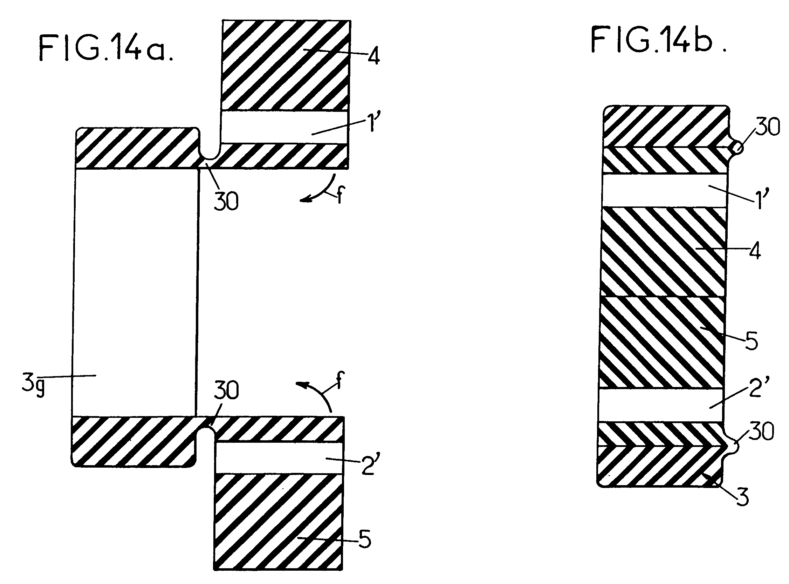

Le mode de réalisation du dispositif élastique illustré par la figure 14c a encore sensiblement le même fonctionnement que celui de la figure 13c et l'originalité réside, ici encore, dans le mode de fabrication du dispositif. On le moule sous la forme indiquée à la figure 14a. La partie centrale 3g-3d (zone 3 à faible rigidité en traction) est reliée aux zones de butée en compression 4 et 5 par des charnières 30. La hauteur des zones 4 et 5 est telle qu'après pivotement vers l'intérieur (flèches f) les zones 4 et 5 ne peuvent se superposer entre les branches 3g et 3d qu'en étant comprimées l'une contre l'autre, ce qui fournit la précontrainte en compression avant montage.

## Revendications

1. Dispositif pour la suspension d'une structure vibrante sur une structure de support rigide, notamment pour la suspension d'une tubulure d'échappement d'un moteur de véhicule sur la caisse de ce dernier, du type comportant un élément élastique (A) propre à travailler en traction et pourvu d'au moins un premier organe d'accrochage (1) à l'une desdites structures et d'au moins un second organe d'accrochage (2) à l'autre structure, lesdits organes d'accrochage étant constitués par des axes traversant ledit élément élastique (A) et espacés l'un de l'autre dans la direction des efforts statiques, caractérisé en ce que ce dispositif comportant : une zone (3) présentant une plage (E) de fonctionnement à faible raideur en traction ou compression, vis-à-vis des efforts de traction ou compression s'exerçant entre les organes d'accrochage précités (1,2) ; au moins deux zones (4,5) rigides de butée coopérantes propres à conférer à l'élément au repos, par une mise en appui mutuel, et sous l'action de premiers moyens appropriés (6), une forte raideur vis-à-vis des efforts de compression agissant entre lesdits organes d'accrochage (1, 2), dans une plage de fonctionnement à forte raideur en compression située à la jonction, du côté compression, avec ladite plage de fonctionnement à faible raideur ; et des seconds moyens (7, 8) propres à conférer audit élément (A) une forte raideur vis-à-vis des efforts de traction agissant entre lesdits organes d'accrochage (1, 2), dans une plage de fonctionnement à forte raideur en traction située à la jonction, du côté traction, avec ladite plage de fonctionnement à faible raideur (E).

2. Dispositif selon la revendication 1, caractérisé en ce que ladite zone à faible raideur (3) est agencée pour intervenir dès que les deux dites zones de butée (4, 5) ne sont plus en appui mutuel.

3. Dispositif selon la revendication 1 ou 2, caractérisé en ce que ladite plage de fonctionnement à faible raideur est fournie par deux branches souples (3d, 3g) dudit élément (A), lesquelles s'étendent globalement entre lesdits premier et second organes d'accrochage (1,2), de part et d'autre d'un corps central (4, 5) à plus forte raideur, comportant lesdites zones rigides de butée, également reliées, respectivement, auxdits organes d'accrochage (1,2).

4. Dispositif selon l'une quelconque des revendications précédentes, caractérisé en ce que lesdits premiers moyens comprennent, dans l'une (4) desdites zones de butée de l'élément, un insert (6) engagé dans un passage de section plus faible de ladite zone, par suite de quoi l'introduction de l'insert (6) dans ce passage dilate la zone de butée (4) concernée et l'amène en appui de compression sur ladite seconde zone de butée (5), ledit élément élastique (A) étant au repos.

5. Dispositif selon la revendication 4, caractérisé en ce que ledit insert (6) est creux et sert à recevoir l'un (1) desdits organes d'accrochage (1,2).

6. Dispositif selon l'une quelconque des revendications 1 à 3, caractérisé en ce que lesdits premiers moyens sont constitués par lesdits organes d'accrochage (1,2) eux-mêmes, lesquels sont d'une section plus forte que celle des passages desdites zones (4,5) de butée dans lesquels ils sont introduits, par suite de quoi leur introduction dans ces passages dilate lesdites zones de butée (4,5) et les amène en appui de compression l'une sur l'autre, ledit élément élastique (A) étant au repos.

7. Dispositif selon l'une quelconque des revendications précédentes, caractérisé en ce que lesdits seconds moyens comprennent un cerclage (7,8) relativement rigide en traction et souple en flexion, entourant ledit élément élastique (A) ou incorporé à cet élément.

8. Dispositif selon l'une quelconque des revendications 3 à 6, caractérisé en ce que ledit corps central (4,5) comporte au moins un alvéole (11) présentant au moins deux parois opposées (13,14) propres à venir en appui l'une sur l'autre dans la plage de fonctionnement à forte raideur en traction de l'élément (A).

9. Dispositif selon la revendication 1 ou 2, caractérisé en ce que ledit élément élastique (A) est comprimé par une armature extérieure (15) amenant les deux dites zones de butée (4,5) en appui de compression l'une sur l'autre lorsque ledit élément (A) est au repos, en ce que ladite zone de fonctionnement à faible raideur est constituée par deux branches relativement souples (3d,3g) reliant l'une desdites zones rigides de butée (5) à cette armature (15), et en ce que lesdits seconds moyens comprennent une troisième zone rigide de butée (16) propre à venir en appui de compression sur la zone de butée précitée (5), à laquelle sont raccordées lesdites branches (3d,3g), lors du fonctionnement dudit élément (A) dans ladite plage de fonctionnement à forte raideur en traction.

10. Dispositif selon la revendication 7, du type comportant un cerclage (8) incorporé à l'élément élastique (A), caractérisé en ce que ce cerclage comporte des boucles entourant les organes d'accrochage (1, 2).

11. Dispositif selon la revendication 1 ou 2, caractérisé en ce qu'il comporte une pièce rigide (17) présentant au moins deux crochets (18, 20) s'étendant de part et d'autre d'une zone de butée (5) à forte rigidité, en ce que lesdits premiers moyens sont fournis par une mise en compression, avant montage, de ladite zone (5) par l'un (18) desdits crochets, et en ce que lesdits seconds moyens sont fournis par une mise en compression de l'autre crochet (20) sur l'autre extrémité (21) de ladite zone de butée (5).

12. Dispositif selon l'une quelconque des revendications 1 à 3, caractérisé en ce qu'il comporte un étrier (26) dont une branche est incluse dans une zone de butée rigide (5) de l'élément élastique (A) et dont l'autre branche (27) est en appui de compression sur l'extrémité d'une autre zone de butée rigide (4), fournissant ainsi les premiers moyens précités.

13. Dispositif selon la revendication 3, caractérisé en ce qu'avant montage lesdites zones de butée (4, 5) sont décalées de part et d'autre par rapport à ladite zone à faible raideur (3), et ont une hauteur telle que leur réalignement par introduction dans la boucle (3g, 3d) ne peut se faire que par mise en compression mutuelle desdites zones (4, 5).

14. Dispositif selon la revendication 3, caractérisé en ce qu'avant montage les zones de butée rigides (4, 5) sont moulées face à face d'un côté de ladite zone à faible raideur (3) en lui étant reliées par des charnières (30), et en ce que leur hauteur est telle que leur introduction à l'intérieur de ladite zone (3) ne peut se faire, après pivotement (f), que par leur mise en compression mutuelle.

## Patentansprüche

1. Vorrichtung zum Aufhängen einer schwingenden Baueinheit an einer starren Trägereinheit, insbesondere zum Aufhängen des Auspuffsystemes eines Fahrzeugmotors an der Fahrzeugkarosserie, enthaltend ein elastisches Element (A), das unter Zugbeanspruchung eingesetzt werden kann und das wenigstens ein erstes Aufhängeelement (1) an einer der Einheiten und wenigstens ein zweites Aufhängeelement (2) an der anderen Einheit aufweist, wobei die Halterungselemente aus Wellen bestehen, die das elastische Element (A) quer durchlaufen und in Richtung der statischen Beanspruchungen mit Abstand zueinander angeordnet sind,
dadurch gekennzeichnet, daß die Vorrichtung enthält: eine Zone (3), die einen Wirkungsbereich (E) geringer Zug- bzw. Druckfestigkeit bildet, und zwar hinsichtlich der zwischen den genannten Halteelementen (1, 2) wirkenden Zug- oder Druckbeanspruchungen; wenigstens zwei zusammenwirkende, starre Anschlagszonen (4, 5), die auf das Element in Ruhelage eine große Festigkeit hinsichtlich der zwischen den Halteelementen (1, 2) wirkenden Druckbeanspruchungen übertragen können, indem sie sich gegenseitig stützen und indem erste geeignete Mittel (6) in einem Wirkungsbereich hoher Druckfestigkeit, die hinsichtlich der Druckbeanspruchung an dem Schnittpunkt mit dem Wirkungsbereich geringer Festigkeit liegt, darauf einwirken; und zweite Mittel (7, 8), die dem Element (A) eine große Festigkeit gegenüber der zwischen den genannten Halteelementen (1, 2) wirkenden Zugbeanspruchung verleihen können, und zwar in einem Wirkungsbereich hoher Zugfestigkeit, der hinsichtlich der Zugbeanspruchung im Schnittpunkt mit dem Funktonsbereich geringer Festigkeit (E) liegt.

2. Vorrichtung nach Anspruch 1, dadurch gekennzeichnet, daß die Zone geringer Festigkeit (3) angetrieben ist, um auf diese Weise einzugreifen, sobald sich die beiden Anschlagszonen 4, 5 nicht mehr gegenseitig stützen.

3. Vorrichtung nach Anspruch 1 oder 2, dadurch gekennzeichnet, daß der Wirkungsbereich geringer Festigkeit mit zwei biegsamen Armen (3d, 3g) des Elements (A) versehen ist, die sich im großen und ganzen zwischen dem ersten und dem zweiten Halteelement (1, 2) erstrecken, und zwar auf beiden Seiten eines Zentralkörpers (4, 5) höherer Festigkeit, der die gleichfalls mit den Halteelementen (1 bzw. 2) verbundenen starren Anschlagszonen umfaßt.

4. Vorrichtung nach einem der vorangegangenen Ansprüche, dadurch gekennzeichnet, daß die ersten Mittel in einer (4) der genannten Anschlagszonen des Elements einen Einsatz (6) enthalten, der in einer Durchgangsöffnung eingesetzt ist, die einen kleineren Querschnitt aufweist als die genannte Zone, weshalb das Einfügen des Einsatzes (6) in die Druchgangsöffnung die betroffenen Anschlagszone (4) vergößert und diese gegen die zweite Anschlagszone (5) drückt, wobei sich das elastische Element (A) in Ruhelage befindet.

5. Vorrichtung nach Anspruch 4, dadurch gekennzeichnet, daß der Einsatz (6) hohl ist und der Aufnahme eines (1) der genannten Halteelemente (1, 2) dient.

6. Vorrichtung nach einem der Ansprüche 1 bis 3, dadurch gekennzeichnet, daß die ersten Mittel aus den Halteelementen (1, 2) selbst gebildet werden, die im Querschnitt kräftiger sind als die Durchgangsöffnungen der geannten Anschlagszonen (4, 5), in die sie eingefügt werden, weshalb deren Einführen in die Durchgangsöffnungen die genannten Anschlagszonen (4, 5) vergrößert und diese gegeneinander drückt, wobei sich das elastische Element (A) in Ruhelage befindet.

7. Vorrichtung nach einem der vorangegangenen Ansprüche, dadurch gekennzeichnet, daß die zweiten Mittel eine Hülse (7, 8) umfassen, die unter Zugbeanspruchung relativ starr und unter Biegebeanspruchung relativ biegsam ist, und die das elastische Element (A) umgibt oder in dieses Element eingebaut ist.

8. Vorrichtung nach einem der Ansprüche 3 bis 6, dadurch gekennzeichnet, daß der Zentralkörper (4, 5) wenigstens einen Hohlraum (11) umfaßt, der wenigstens zwei einander gegenüberliegende Wände (13, 14) aufweist, die einander im Wirkungsbereich hoher Zugfestigkeit des Elements (A) stützen können.

9. Vorrichtung nach Anspruch 1 oder 2, dadurch gekennzeichent, daß das elastische Element (A) von einer äußeren Verstärkung (15) zusammengedrückt wird, die die beiden Anschlagszonen (4, 5) gegeneinander drückt, wenn sich das Element (A) in Ruhelage befindet, daß der Wirkungsbereich geringer Festigkeit aus zwei Armen (3d, 3g) besteht, die relativ biegsam sind und eine der starren Anschlagszonen (5) mit dem Verstärkungselement (15) verbinden und daß die zweiten Mittel eine dritte starre Anschlagszone (16) umfassen, die mit der genannten Anschlagszone (5) in Druckkontakt kommen kann, welche mit den genannten Armen (3d, 3g) verbunden ist, und dies während des Betriebs des Elements (A) im genannten Wirkungsbereich hoher Zugfestigkeit.

10. Vorrichtung nach Anspruch 7, enthaltend eine in das elastische Element (A) eingebaute Hülse (8), dadurch gekennzeichent, daß die Hülse Bügel enthält, die die Aufhängeelemente (1, 2) umgeben.

11. Vorrichtung nach Anspruch 1 oder 2, dadurch gekennzeichnet, daß sie ein starres Element (17) enthält, das wenigstens zwei Haken (18, 20) bildet, die sich auf beiden Seiten einer Anschlagszone (5) hoher Festigkeit erstrecken, daß die genannten ersten Mittel durch einen (18) der Haken vor der Montage die Zone (5) einer Druckbelastung aussetzen, und daß die genannten zweiten Mittel den anderen Haken (20) auf das andere Ende (21) der genannten Anschlagszone (5) drücken.

12. Vorrichtung nach einem der Ansprüche 1 bis 3, dadurch gekennzeichnet, daß sie eine Klammer (26) umfaßt, von der ein Arm in einer starren Anschlagszone (5) des elastischen Elements (A) eingeschlossen ist und von der der andere Arm (27) auf das Ende einer anderen starren Anschlagszone (4) drückt, um auf diese Weise die ersten Mittel zu versorgen.

13. Vorrichtung nach Anspruch 3, dadurch gekennzeichnet, daß vor der Montage die genannten Anschlagszonen (4, 5) beiderseits gegenüber der genannten Zone geringer Festigkeit (3) verschoben sind, und eine solche Höhe aufweisen, daß ihre erneute Ausrichtung durch das Einfügen in die Schlinge (3d, 3g) nur durch ein Gegeneinanderdrücken der genannten Zonen (4, 5) möglich ist.

14. Vorrichtung nach Anspruch 3, dadurch gekennzeichnet, daß vor Montage die starren Anschlagszonen (4, 5) gegenüber einer Seite der genannten Zone geringer Festigkeit (3) ausgeformt werden, wobei sie mit dieser über Scharniere (30) verbunden sind, und daß ihre Höhe so gewählt ist, daß ihr Einführen in das Innere der genannten Zone (3) nur nach einem Schwenken durch deren Gegeneinanderdrücken möglich ist.

## Claims

1. Device for the suspension of a vibrating structure from a rigid support structure, notably for the suspension of the exhaust pipe of a motor vehicle from the bodywork of the latter, of the type including an elastic element (A) suitable for working in traction and provided with at least one first member (1) for attaching to one of the said structures and with at least one second member (2) for attaching to the other structure, the said attachment members consisting of pins passing through the said elastic element (A) and spaced apart from each other in the direction of the static forces, characterised in that this device including: a zone (3) having an operating range with low stiffness in traction or compression, vis-a-vis the traction or compression forces exerted between the aforesaid attachment members (1, 2); at least two cooperating rigid bearing zones (4, 5) suitable for conferring on the element when at rest, by being brought to bear against each other, and under the action of suitable first means (6), high stiffness vis-a-vis the compression forces acting between the said attachment members (1, 2), in an operating range with high stiffness in compression situated at the junction, on the compression side, with the said operating range with low stiffness; and second means (7, 8) suitable for conferring on the said element (A) high stiffness vis-a-vis the traction forces acting between the said attachment members (1, 2) in an operating range with high stiffness in traction situated at the junction, on the traction side, with the said operating range with low stiffness (E).

2. Device according to Claim 1, characterised in that the said zone with low stiffness (3) is arranged so as to act as soon as the said two bearing zones (4, 5) no longer bear against each other.

3. Device according to Claim 1 or Claim 2, characterised in that the said operating range with low stiffness is provided by two flexible arms (3d, 3g) of the said element (A), which extend globally between the said first and second attachment members (1, 2), on each side of a central body (4, 5) with greater stiffness, including the said rigid bearing zones, also connected, respectively, to the said attachment members (1, 2).

4. Device according to any one of the preceding claims, characterised in that the said first means comprise, in one (4) of the said bearing zones of the element, an insert (6) engaged in a passage in the said zone with a smaller cross section, as a result of which the insertion of the insert (6) into this passage expands the bearing zone (4) concerned and brings it to bear in compression on the said second bearing zone (5), the said elastic element (A) being at rest.

5. Device according to Claim 4, characterised in that the said insert (6) is hollow and serves to receive one (1) of the said attachment members (1, 2).

6. Device according to any one of Claims 1 to 3, characterised in that the said first means consist of the said attachment members (1, 2) themselves, which have a cross section larger than that of the passages in the said bearing zones (4, 5) into which they are inserted, as a result of which their insertion into these passages expands the said bearing zones (4, 5) and brings them to bear in compression against each other, the said elastic element (A) being at rest.

7. Device according to any one of the preceding claims, characterised in that the said second means comprise a hoop (7, 8) which is relatively rigid in traction and flexible in flexion, surrounding the said elastic element (A) or incorporated in this element.

8. Device according to any one of Claims 3 to 6, characterised in that the said central body (4, 5) includes at least one cavity (11) having at least two opposite walls (13, 14) suitable for coming to bear against each other in the operating range of the element (A) with high stiffness in traction.

9. Device according to Claim 1 or 2, characterised in that the said elastic element (A) is compressed by an outer frame (15) bringing the said two bearing zones (4, 5) to bear against each other in compression when the said element (A) is at rest, in that the said operating zone with low stiffness consists of two relatively flexible arms (3d, 3g) connecting one of the said rigid bearing zones (5) to this frame (15), and in that the said second means comprise a third rigid bearing zone (16) suitable for coming to bear in compression on the aforesaid bearing zone (5), to which are connected the said arms (3d, 3g), during the operation of the said element (A) in the said operating range with high stiffness in traction.

10. Device according to Claim 7, of the type including a hoop (8) incorporated in the elastic element (A), characterised in that this hoop includes loops surrounding the attachment members (1, 2).

11. Device according to Claim 1 or 2, characterised in that it includes a rigid piece (17) having at least two hooks (18, 20) extending on each side of a bearing zone (5) with high rigidity, in that the said first means are provided by compressing, before mounting, the said zone (5) by means of one (18) of the said hooks, and in that the said second means are provided by compressing the other hook (20) on the other end (21) of the said bearing zone (5).

12. Device according to any one of Claims 1 to 3, characterised in that it includes a stirrup (26), one arm of which is included in a rigid bearing zone (5) of the elastic element (A) and another arm (27) of which bears in compression on the end of another rigid bearing zone (4), thus providing the aforesaid first means.

13. Device according to Claim 3, characterised in that, before mounting, the said bearing zones (4, 5) are offset on each side with respect to the said zone with low stiffness (3), and have a height such that they can be realigned by insertion into the loop (3g, 3d) only by the said zones (4, 5) being mutually compressed.

14. Device according to Claim 3, characterised in that, before mounting, the rigid bearing zones (4, 5) are moulded face to face on one side of the said zone with low stiffness (3) while being connected to it by hinges (30), and in that their height is such that they can be inserted inside the said zone (3), after pivoting (f), only by being mutually compressed.
